# EUROPEAN PATENT SPECIFICATION

(11) **EP 1 360 421 B1**
(45) Date of publication and mention of the grant of the patent: **02.11.2005**
(21) Application number: 02709914.2
(22) Date of filing: 06.02.2002
(51) Int. Cl.: F16C 11/04, B62B 9/20, F16C 11/10

(54) **ANGULARLY ADJUSTABLE COUPLING**
WINKELVERSTELLBARE KUPPLUNG
COUPLAGE REGLAGE D'ANGLE

(30) Priority: 09.02.2001 AU PP296201
(43) Date of publication of application: 12.11.2003
(73) Proprietor: IGC (Australia) Pty. Ltd., West Sunshine, VIC 3020 (AU)
(72) Inventor: BIDWELL, Alan, Leslie, West Sunshine, Victoria 3020 (AU)
(74) Representative: Newell, William Joseph
(86) International application number: PCT/AU2002/000117
(87) International publication number: WO 2002/064986

(56) References cited:
- DE-U- 9 303 956
- DE-U- 20 007 948
- US-A- 4 747 468
- US-A- 5 039 118
- US-A- 5 516 142

## Description

### Field of the Invention

This invention relates to an angularly adjustable coupling of the kind utilised to interconnect tubular components in a manner providing for the components to be selectively releasably latched at different angular positions with respect to each other.

### Background Art

A particular application of couplings of the kind in question is to prams, strollers or pushers and similar push-along vehicles for transporting babies and young children. These vehicles typically include an inclined inverted U-shaped handle assembly of tubular components. In order to accommodate carers of different heights, and to maximise their comfort when pushing the vehicle and to minimise back strain, it is known to provide an adjustable coupling between the handle assembly and the main frame of the vehicle, at each side of the vehicle. One form of this coupling is a pair of interengaged toothed annular members that may be temporarily disengaged by pressing a push button against a return spring to allow relative rotation of the parts.

These angularly adjustable couplings typically comprise a pair of rotatably linked components each made up of an assembly of plastics mouldings. A problem that has come to light in locations of more extreme climate is sudden structural failure of one of these assemblies, resulting in structural collapse of one coupling has given rise to strains and stresses in the other coupling which have caused a simultaneous or near simultaneous failure of the other coupling. The result has been complete separation of the handle assembly from the rest of the vehicle, which can of course have very series consequences depending upon the location of the vehicle.

DE-U1-9303956.3 discloses an angularly adjustable coupling in which a pair of toothed wheels define sockets to receive tubular members to be connected. A two part cover defines a casing about the wheels and has respective circular recesses to accommodate the wheels. The wheels have mutual toothed interengagement on their opposed cylindrical faces. If either of the wheel members fails structurally, for example in the circumstances noted above, the respective tubular member will disengage from the coupling.

It is an objective of the present invention to at least reduce the likelihood of complete separation occurring at angularly adjustable couplings of the kind discussed.

### Summary of the Invention

The invention accordingly provides an angularly adjustable coupling including:
a pair of socket or plug members formed in one or more plastics materials and adapted to engage and be fixed to respective tubular components;
means linking said socket or plug members whereby they are relatively moveable to a plurality of positions having different angular relationships between the tubular components;
wherein said coupling further includes an elongate reinforcing means arranged so that, when the coupling is fixed to said respective tubular components, the reinforcing means is fixed to and links both the socket or plug members and is further fixed to and links the tubular components,
whereby, on any structural failure of the socket or plug members or of said linking means, the tubular components remain connected together, by said reinforcing means.

Preferably, the linking means includes means to selectively releasably latch said socket or plug members at each of said positions.

Preferably, the elongate reinforcing means includes two or more components hingedly connected together at a hinge point so as to be relatively pivotably adjustable according to the angular relationship between the tubular components.

In a preferred form, the reinforcing means comprises a pair of metal plates hinged together coaxially with the axis of angular adjustment between the tubular components. Preferably, the hinge point is fixed to at least one of the said plug or socket members. Advantageously, respective common fasteners are employed to fix the reinforcing means, eg. the respective plates, simultaneously both to a respective socket or plug member and a respective tubular component. Each of the common fasteners preferably engages both the reinforcing means and the respective tubular components, and may conveniently extend transversely through the reinforcing means and the respective tubular component.

Preferably, said socket or plug members includes plastics mouldings that include formations to accommodate and locate the reinforcing means.

### Brief Description of the Drawings

The invention will be further described, by way of example only, with reference to the accompanying drawings, in which:

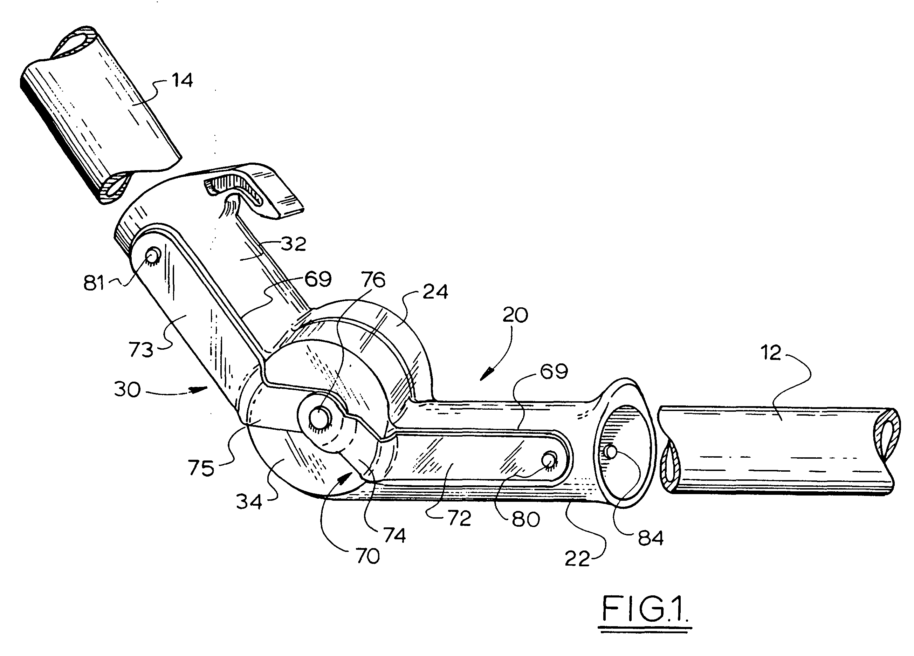

Figure 1 is a perspective view of an angularly adjustable coupling according to an embodiment of the invention, shown joining a pair of tubular frame components; and
Figure 2 is an exploded view of the coupling from another direction and orientation.

The illustrated angularly adjustable coupling 10 is shown in situ for interconnecting respective tubular frame components 12,14. Typically, these tubular components would be part of the main frame and handle frame respectively of a stroller or pram and there would be respective similar couplings 10 on opposite sides of the stroller or pram.

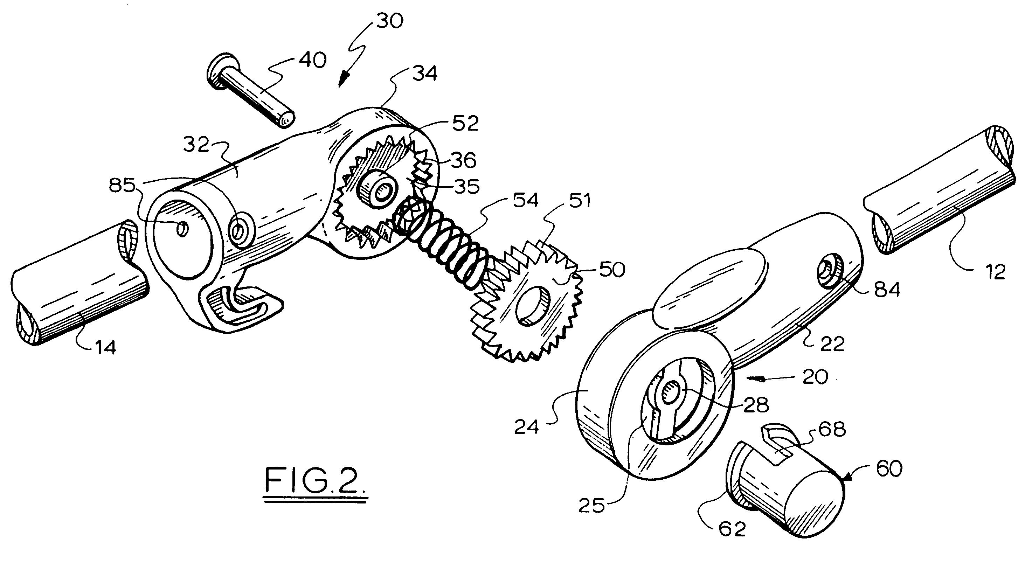

The principal body members of the coupling are indicated at 20,30. Each comprises generally tubular socket parts 22,32 of annular cross-section adapted to engage by receiving the respective tubular components 12,14, and mutually complementary annular parts 24,34. Annular parts 24,34 have opposed internal recesses 25,35 defined about their cylindrical peripheries by generally V-shaped axially aligned teeth. In Figure 2, only the teeth 36 of annular part 34 are visible. The annular parts 24,34 are assembled together for rotation on a pivot pin 40 and are normally locked together against rotation by a pinion 50 mounted on a boss 52 in cavities 25, 35.

Pinion 50 is moveable axially on boss 52 between a first position, to which it is biased by helical compression spring 54 and in which pinion teeth 51 engage teeth 36, on both annular parts, and a second position wholly within cavity 35 in which the pinion teeth do not engage the teeth of annular part 24. In this latter position, the body members 20, 30 are mutually rotatable, by hand manipulation, on the axis of pin 40 to adjust the relative angular relationship of tubular components 12, 14. To allow this adjustment, pinion 50 is axially pushed from its latching position by a coaxially moveable hollow push button 60 which is exposed to the exterior of annular part 24. Push button 60 has a lipped annular rim 62 that engages the endface of pinion 50. The lip retains the push button in an opening 64 in annular part 24, in which it is slidably keyed by engagement between a transverse web 28 of annular part 24 and a pair of longitudinal slots 68 in push button 60. Web 28 also fixes pin 40 in position.

On the inside faces of body members 20, 30 - that is, in the pram or stroller, on the sides that face the other coupling - the plastics mouldings have ridges 69 that define shallow seats for respective steel plates 72, 73. It will have been noted that the axis of sockets 22, 32 are offset from the transverse pivot axis of pin 40. Correspondingly, the inner ends of plates 72, 73 have curved and upset segments 74, 75 so that the inner ends of the plates overlap and are pivotably fastened together coaxially with the axis of pin 40 by a secure rivet 76 that also engages annular part 34.

The other ends of plates 72, 73 have fastener apertures 80, 81 that are in register with diametrically opposed matching apertures 84, 85 in the opposite sides of the respective sockets 22, 32. When the coupling is assembled in situ, respective single fasteners extend through the plate 72 or 73, the socket 22, or 32 and the tubular frame component 12 or 14.

It will be seen that the finished assembly 70 of plates 72, 73 comprises an elongate reinforcing means arranged so that, when the coupling is fixed to the respective tubular components 12, 14, the reinforcing assembly 70 is fixed to and links both of the sockets 22, 32 and further links both of the tubular components 12, 14. If in use there is any structural failure of the body members 20, 30 or of the means linking them together for relative angular adjustment, the tubular components 12, 14 remain connected together by the reinforcing assembly. Such structural failures can occur, substantially without warning, for example, when there is a fracture in the plastics moulding or welding arising from embrittlement in a more extreme climatic environment, eg. in a very cold or very hot location. In the application under discussion, ie. a pram, stroller or other baby or child carrying vehicle, the illustrated arrangement guards against the separation of the handle assembly from the main frame assembly.

## Claims

1. An angularly adjustable coupling including:
a pair of socket or plug members (22,32) formed in one or more plastics materials and adapted to engage and be fixed to respective tubular components (12,14);
means (40) linking said socket or plug members (22,32) whereby they are relatively moveable to a plurality of positions having different angular relationships between the tubular components;
**characterised in that** said coupling further includes an elongate reinforcing means (72,73) arranged so that, when the coupling is fixed to said respective tubular components (12,14) the reinforcing means is fixed to and links both the socket or plug members (22,32) and is further fixed to and links the tubular components,
whereby, on any structural failure of the socket or plug members (22,32) or of said linking means (40), the tubular components remain connected together by said reinforcing means (72,73).

2. An angularly adjustable coupling according to claim 1, wherein the linking means (40) includes means (50) to selectively releasably latch said socket or plug members (22,32) at each of said positions.

3. An angularly adjustable coupling according to claim 1 or 2, wherein the elongate reinforcing means includes two or more components (72,73) hingedly connected together at a hinge point (76) so as to be relatively pivotably adjustable according to the angular relationship between the tubular components (12,14).

4. An angularly adjustable coupling according to claim 3, wherein the reinforcing means comprises a pair of metal plates (72,73) hinged together coaxially with the axis of angular adjustment between the tubular components.

5. An angularly adjustable coupling according to claim 3 or 4, wherein the hinge point (76) is fixed to at least one of the said plug or socket members (22,23).

6. An angularly adjustable coupling according to any of the preceding claims, wherein respective common fasteners (80,81) are employed to fix the reinforcing means (72,73) simultaneously both to a respective socket or plug member (22,23) and a respective tubular component (12,14).

7. An angularly adjustable coupling according to claim 6, wherein each of said common fasteners (80,81) engages both the reinforcing means (72,73) and the respective tubular component (12,14).

8. An angularly adjustable coupling according to claim 7, wherein each fastener (80,81) extends transversely through the reinforcing means (72,73) and the respective tubular component (12,14).

9. An angularly adjustable coupling according to any preceding claim, wherein said socket or plug members (22,25) include plastics mouldings that include formations (69) to accommodate and locate the reinforcing means (72,73).

## Patentansprüche

1. Winkelverstellbare Kupplung mit einem Paar Fassungs- oder Steckkörper (22, 32), die in einem oder mehreren Kunststoffmaterialien ausgebildet sind und mit entsprechenden rohrförmigen Einzelteilen (12, 14) in Eingriff bringbar und befestigbar sind, einer Vorrichtung (40), die die Fassungs- oder Steckkörper (22, 32) verbindet, so daß sie in mehrere Positionen, die unterschiedliche Winkelverhältnisse zwischen den rohrförmigen Einzelteilen aufweisen, relativ beweglich sind, **dadurch gekennzeichnet, daß** die Kupplung des weiteren eine längliche Verstärkungseinrichtung (72, 73) aufweist, die so angeordnet ist, daß dann, wenn die Kupplung mit den entsprechenden rohrförmigen Einzelteilen (12, 14) fixiert ist, die Verstärkungseinrichtung ebenfalls fixiert ist und sowohl die Fassungs- als auch die Steckkörper (22, 32) verbindet und des weiteren mit den rohrförmigen Einzelteilen fixiert ist und diese verbindet, wodurch bei irgendeinem strukturellen Versagen der Fassungs- oder Steckkörper (22, 32) oder der Verbindungsvorrichtung (40) die rohrförmigen Einzelteile durch die Verstärkungseinrichtung (72, 73) miteinander verbunden bleiben.

2. Winkelverstellbare Kupplung nach Anspruch 1, **dadurch gekennzeichnet, daß** die Verbindungsvorrichtung (40) Mittel (50) zur selektiven Lösung der Verriegelung der Fassungs- oder Steckkörper (22, 32) in jeder der genannten Lagen aufweist.

3. Winkelverstellbare Kupplung nach Anspruch 1 oder 2, **dadurch gekennzeichnet, daß** die längliche Verstärkungseinrichtung zwei oder mehr Einzelteile (72, 73) aufweist, die an einem Anlenkungspunkt (76) so miteinander gelenkig verbunden sind, daß sie durch Relativdrehung gemäß der zwischen den rohrförmigen Einzelteilen (12, 14) vorhandenen Winkelbeziehung einstellbar sind.

4. Winkelverstellbare Kupplung nach Anspruch 3, **dadurch gekennzeichnet, daß** die Verstärkungseinrichtung ein Paar Metallplatten (72, 73) aufweist, die gelenkig miteinander verbunden sind und koaxial zur Achse der Winkelverstellung zwischen den rohrförmigen Einzelteilen liegen.

5. Winkelverstellbare Kupplung nach Anspruch 3 oder 4, **dadurch gekennzeichnet, daß** der Gelenkpunkt (76) an wenigstens einem der genannten Teile, nämlich Fassungs- oder Steckkörper (22, 23), festliegt.

6. Winkelverstellbare Kupplung nach einem der vorhergehenden Ansprüche, **dadurch gekennzeichnet, daß** übliche Befestigungselemente (80, 81) benutzt werden, um die Verstärkungseinrichtung (72, 73) gleichzeitig sowohl an einem entsprechenden Fassung- oder Steckkörper (22, 23) als auch einem entsprechenden rohrförmigen Einzelteil (12, 14) zu befestigen.

7. Winkelverstellbare Kupplung nach Anspruch 6, **dadurch gekennzeichnet, daß** jedes der üblichen Befestigungselemente (80, 81) sowohl mit der Verstärkungseinrichtung (72, 73) als auch mit dem entsprechenden rohrförmigen Einzelteil (12, 14) in Eingriff steht.

8. Winkelverstellbare Kupplung nach Anspruch 7, **dadurch gekennzeichnet, daß** jedes Befestigungselement (80, 81) sich quer durch die Verstärkungseinrichtung (72, 73) und das entsprechende rohrförmige Einzelteil (12, 14) erstreckt.

9. Winkelverstellbare Kupplung nach einem der vorhergehenden Ansprüche, **dadurch gekennzeichnet daß** die Fassungs- oder Steckkörper (22, 25) Kunststoffspritzgußteile sind, welche eine Formgebung (69) aufweisen, die an die Verstärkungseinrichtung (72, 73) angepaßt ist und sie an Ort und Stelle hält.

## Revendications

1. Couplage ajustable angulairement comprenant :
- une paire d'éléments de douille ou de fiche (22, 32) formés en une ou plusieurs matières plastiques et adaptés pour engager et être fixés à des composants tubulaires respectifs (12, 14) ;
- un moyen (40) reliant lesdits éléments de douille ou de fiche (22, 32) par lequel ils sont déplaçables relativement jusqu'à une pluralité de positions ayant différentes relations angulaires entre les composants tubulaires ;
**caractérisé par le fait que** ledit couplage comprend en outre un moyen de renforcement allongé (72, 73) disposé de telle sorte, que lorsque le couplage est fixé auxdits composants tubulaires respectifs (12, 14), le moyen de renforcement est fixé à et relie les deux éléments de douille ou de fiche (22, 32) et est encore fixé à et relie les composants tubulaires,
ce par quoi, lors de n'importe quelle défaillance structurale des éléments de douille ou de fiche (22, 32) ou dudit moyen de liaison (40), les composants tubulaires restent connectés ensemble par ledit moyen de renforcement (72, 73).

2. Couplage ajustable angulairement selon la revendication 1, dans lequel le moyen de liaison (40) comprend un moyen (50) pour verrouiller de façon sélectivement libérable lesdits éléments de douille ou de fiche (22, 32) à chacune desdites positions.

3. Couplage ajustable angulairement selon l'une des revendications 1 ou 2, dans lequel le moyen de renforcement allongé comprend deux composants (72, 73) ou davantage connectés ensemble de façon articulée au niveau d'un point d'articulation (76) de façon à être ajustables en pivotement de façon relative conformément à la relation angulaire entre les composants tubulaires (12, 14).

4. Couplage ajustable angulairement selon la revendication 3, dans lequel le moyen de renforcement allongé comprend une paire de plaques métalliques (72, 73) articulées ensemble coaxialement à l'axe d'ajustement angulaire entre les composants tubulaires.

5. Couplage ajustable angulairement selon l'une des revendications 3 ou 4, dans lequel le point d'articulation (76) est fixé à au moins l'un desdits éléments de fiche ou de douille (22, 23).

6. Couplage ajustable angulairement selon l'une quelconque des revendications précédentes, dans lequel des éléments de fixation communs respectifs (80, 81) sont employés pour fixer le moyen de renforcement (72, 73) simultanément à la fois sur un élément de douille ou de fiche respective (22, 23) et sur un composant tubulaire respectif (12, 14).

7. Couplage ajustable angulairement selon la revendication 6, dans lequel chacun desdits éléments de fixation communs (80, 81) engage à la fois le moyen de renforcement (72, 73) et le composant tubulaire respectif (12, 14).

8. Couplage ajustable angulairement selon la revendication 7, dans lequel chaque élément de fixation (80, 81) s'étend transversalement à travers le moyen de renforcement (72, 73) et le composant tubulaire respectif (12, 14).

9. Couplage ajustable angulairement selon l'une quelconque des revendications précédentes, dans lequel lesdits éléments de douille ou de fiche (22, 25) comprennent des moulages en matière plastique qui comprennent des formations (69) pour recevoir et positionner le moyen de renforcement (72, 73).
